# FASCICULE DE BREVET EUROPEEN

(11) **EP 3 845 103 B1**
(45) Date de publication et mention de la délivrance du brevet: **22.11.2023**
(21) Numéro de dépôt: 20215660.0
(22) Date de dépôt: 18.12.2020
(51) Int. Cl.: A47J 43/10, A47J 43/07, A47J 43/08, A21C 1/02, B01F 27/1121, B01F 27/072, B01F 27/55, B01F 27/95

(54) **DISPOSITIF MELANGEUR**
MISCHVORRICHTUNG
MIXING DEVICE

(30) Priorité: 31.12.2019 FR 1915761
(43) Date de publication de la demande: 07.07.2021
(73) Titulaire: SEB S.A., 69130 Ecully (FR)
(72) Inventeur: PLICHON, Stéphane, 74350 ALLONZIER-LA-CAILLE (FR); BENOIT, David, 74540 GRUFFY (FR)
(74) Mandataire: SEB Développement

(56) Documents cités:
- GB-A- 667 863
- US-A- 2 072 691
- US-A1- 2011 226 140

## Description

### DOMAINE DE L'INVENTION

La présente invention concerne les articles de préparation culinaire et concerne plus particulièrement un dispositif pour réaliser des mélanges, notamment pour permettre le brassage et l'émulsion des ingrédients composant la préparation culinaire, lesdits ingrédients étant versés dans le dispositif.

### ETAT DE LA TECHNIQUE

Dans le domaine de la préparation culinaire il est fréquent de devoir réaliser un mélange à partir d'ingrédient solide, liquide ou semi liquide dont la viscosité est plus ou moins visqueuse.

Le moyen le plus simple connu pour réaliser un mélange est d'incorporer les ingrédients dans un bol et de les mélanger à l'aide d'une spatule ou d'un fouet manuel.

Par fouet, il est entendu dans le présent document, un ustensile comprenant une pluralité de brins permettant de mélanger, battre, émulsionner ensemble des ingrédients alimentaires.

Si le fouet manuel permet de réaliser sans encombre une vinaigrette (i.e. une émulsion d'huile et de vinaigre), l'opération devient beaucoup plus laborieuse et fatigante si l'on souhaite préparer, par exemple une mayonnaise ou des blancs en neige.

Une émulsion est une suspension d'un élément dans une phase dans laquelle il n'est pas miscible. Dans la plus part des cas, il s'agit de deux milieux liquides, des gouttelettes de l'un étant dispersées dans l'autre phase. L'interface des deux milieux est généralement stabilisée par un composé maintenant en suspension l'élément non miscible. L'émulsion la plus connue est la mayonnaise. On rappelle que la mayonnaise est une émulsion d'huile (phase hydrophobe) dans de l'eau, du vinaigre ou du jus de citron (phase aqueuse), utilisant du jaune d'oeuf comme tensioactif.

Une émulsion peut également être une suspension d'un gaz comme l'air dans un liquide ou semi-liquide. Dans la plupart des cas, il s'agit de mousses où de l'air sous forme de bulles est emprisonnée dans une phase liquide comme par exemple des blancs d'oeuf monté en neige ou de la crème fouettée.

De même, on rappelle que monter des blancs d'oeufs en neige consiste à emprisonner de l'air dans du blanc d'oeuf. En pratique, le blanc d'oeuf est une solution aqueuse comprenant notamment des protéines. Le fouet permet d'incorporer, dans le blanc d'oeuf, des bulles d'air qui sont emprisonnées dans l'eau et stabilisées par les protéines.

Cependant, il est bien connu qu'il est difficile de réaliser une mayonnaise ou des blancs en neige à la seule force du poignet.

Ainsi, il existe des dispositifs dans lesquels un fouet est mis en rotation dans un bol. La mise en rotation peut être électrique ou manuel. Un exemple de dispositif pour réaliser des mélanges comprenant un bras et un fouet monté en libre rotation sur le bras est montré dans GB 667 863 A.

Le plus souvent, notamment dans le cas des dispositifs manuels, le fouet est relié à un train d'engrenage permettant de démultiplier la vitesse de rotation du fouet. Ainsi, dans le cas d'un dispositif manuel, on a le plus souvent une manivelle imprimant un mouvement de rotation transmis à un train d'engrenage à l'issu duquel se trouve le fouet.

Bien que fonctionnels, ces dispositifs posent plusieurs problèmes. En effet, les engrenages se retrouvent souvent encrassés et il est délicat de les laver correctement. Or, on comprend qu'il n'est pas hygiénique de conserver des traces d'oeufs cru séché dans les rouages. En plus d'être collant, l'œuf cru est un vecteur de bactéries telles que les salmonelles.

Il est donc impératif de pouvoir laver correctement toute partie en contact avec la nourriture. En sus, les trains d'engrenage impliques des systèmes complexes, coûteux à fabriquer et donc couteux à l'achat pour un utilisateur.

On connait aussi, des dispositifs intégrant un bras et deux fouets excentrés, en rotation libre par rapport au bras. Ces dispositifs sont, le plus souvent, des accessoires d'un robot culinaire, et sont entrainés en rotation par un moteur électrique.

Ces dispositifs sont plus simples que les dispositifs à engrenages, mais la disposition des fouets ne permet pas un mélange homogène.

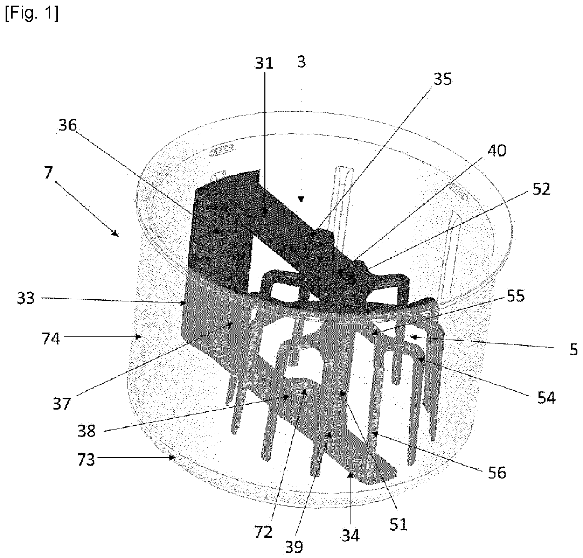

En effet, comme schématisé sur la figure 1, pour éviter que les fouets ne s'entrechoquent et bloquent le dispositif, ceux-ci ont une envergure réduite, inférieure au rayon du bol dans lequel ils sont placés. Il en résulte qu'une zone au centre du bol n'est pas couverte par les fouets.

Dans ce contexte technique, il serait souhaitable d'avoir un dispositif permettant de réaliser facilement des mélanges et des émulsions homogènes, tout en étant peu complexe, robuste et peu coûteux à fabriquer.

### EXPOSE DE L'INVENTION

A cet effet, l'invention propose un dispositif pour réaliser des mélanges, comprenant un bras, adapté pour être entrainé en rotation, autour d'un axe de rotation du bras, par des moyens d'entrainement. En outre, le dispositif comprend au moins un fouet monté par une liaison pivot au bras en libre rotation, autour d'un axe de rotation du fouet distinct de l'axe de rotation du bras. Le fouet présente une extension radiale présentant une cote supérieure à une distance séparant l'axe de rotation du bras et l'axe de rotation du fouet, et le bras présente une forme en C avec une première portion radiale présentant la liaison pivot au fouet, une portion sensiblement axiale et une deuxième portion radiale.

La portion sensiblement axiale du bras peut présenter au moins un déflecteur adapté pour orienter une matière vers le fouet lors de la rotation du bras et du fouet.

La première portion radiale du bras peut présenter un pion de connexion aux moyens d'entrainement du bras, le pion de connexion pouvant être colinéaire de l'axe de rotation du bras.

Le fouet peut présenter une pluralité de brins, chaque brin pouvant s'étendre à partir de l'axe de rotation du fouet avec une extension radiale et au moins une extension axiale.

Selon une disposition particulière le dispositif peut comprendre un bol adapté pour recevoir le bras mélangeur et le fouet.

La portion sensiblement axiale du bras peut être adaptée pour frôler une paroi latérale d'un bol.

Le bol peut présenter une paroi latérale et une paroi de fond, la paroi de fond peut présenter un pion de guidage en rotation du bras mélangeur, le pion de guidage pouvant être colinéaire avec l'axe de rotation bras.

La deuxième portion radiale du bras peut être adaptée pour être liée en rotation libre au pion de guidage de la paroi de fond du bol.

Selon une disposition avantageuse, le dispositif peut comprendre un couvercle muni d'un élément de connexion coopérant avec un élément de connexion du bras.

Selon une disposition avantageuse, les moyens d'entrainement peuvent comprendre des moyens de mises en rotation par énergie humaine ou par énergie électrique.

Selon une disposition avantageuse, les moyens d'entrainement manuel peuvent comprendre un câble à rappel automatique permettant une mise en rotation du bras.

La connexion du bras aux moyens d'entrainements peut comprendre une roue libre à cliquet.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] La figure 1 est une représentation en perspective d'un dispositif selon l'invention.
[Fig. 2] La figure 2 est une vue de côté d'un dispositif selon l'invention.
[Fig. 3] La figure 3 est une vue de dessus d'un dispositif selon l'invention.
[Fig. 4] La figure 4 est une vue schématique de dessus d'un dispositif selon l'invention.

Sur l'ensemble des figures, les éléments similaires portent des références identiques.

### DESCRIPTION DETAILLEE DE L'INVENTION

### Architecture générale

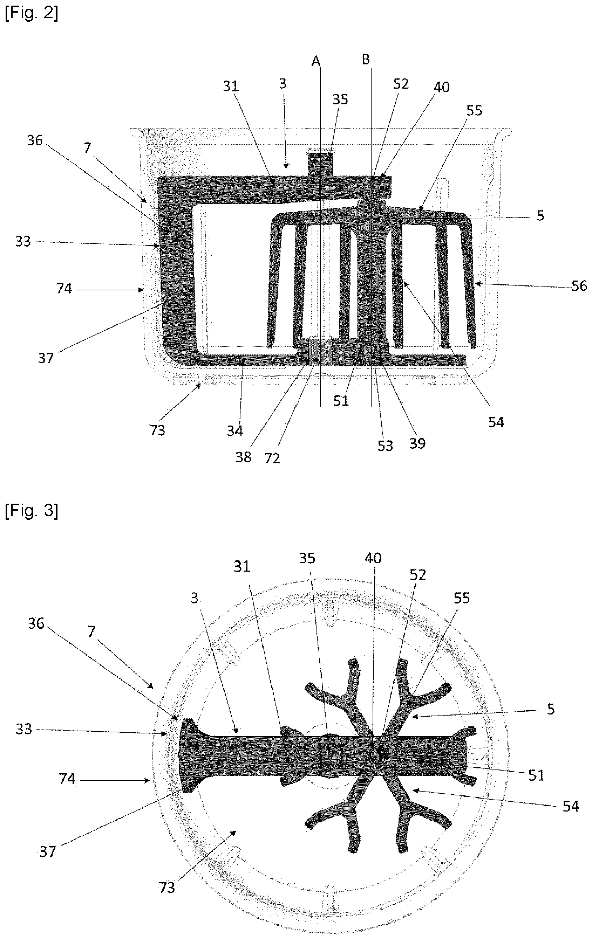

En référence aux figures 1 à 4, il est proposé un dispositif 1 pour réaliser des mélanges, et plus particulièrement des émulsions.

Le dispositif 1 comprend principalement un bras 3 et un fouet 5.

Tel que cela sera décrit ci-après, le dispositif 1 présente une structure cinématique particulièrement astucieuse, dans laquelle, d'une part le bras 3 est adapté pour être entrainé en rotation, autour d'un axe A de rotation du bras 3, par des moyens d'entrainement ; et d'autre part, le fouet 5 est lié par une liaison pivot au bras 3 en libre rotation, autour d'un axe B de rotation du fouet 5 distinct de l'axe A de rotation du bras.

Tel que cela sera développé ci-après, la différence d'axes de rotation est une disposition technique particulièrement avantageuse qui permet au fouet 5 du dispositif 1 d'atteindre une vitesse de rotation et un couple nécessaire pour la réalisation d'une émulsion.

En outre, tel que cela va être détaillé, le dispositif 1 peut très avantageusement être utilisé avec des moyens d'entrainement manuels ou électriques.

De plus, le dispositif 1 peut être fournit comme un accessoire d'un ensemble préexistant qui peut être un ensemble manuel ou électrique de type robot culinaire, ou peut être fournit avec un bol et des moyens d'entrainement pour fonctionner de manière indépendante.

### Bras mélangeur

D'une manière préférentielle, le bras 3 présente une forme en C avec une première portion radiale 31 présentant la liaison pivot 40 au fouet 5, une portion sensiblement axiale 33 et une deuxième portion radiale 34. Le bras 3 peut être réalisé en matière plastique injectée ou moulée. D'une manière avantageuse, le matériau composant le bras 3 peut présenter des propriétés antiadhésives. Ces propriétés antiadhésives peuvent être obtenues par un revêtement ou par un composé noyé dans la masse du bras 3.

Il est précisé que les directions axiales et radiales sont définies par rapport à l'axe A de rotation du bras 3. Ainsi, la direction axiale est une direction sensiblement parallèle à l'axe A de rotation du bras 3. La direction radiale est une direction sensiblement perpendiculaire à l'axe A de rotation du bras 3.

La première portion radiale 31 du bras 3 est adaptée pour être connectée à des moyens d'entrainement en rotation qui comprennent un empreinte femelle complémentaire de la géométrie du pion 35. A ce titre, la première portion radiale 31 du bras 3 présente un pion 35 de connexion aux moyens d'entrainement du bras 3. Le pion 35 de connexion est colinéaire de l'axe A de rotation du bras 3. Le pion 35 est adapté pour transmettre un mouvement de rotation. Aussi, selon le mode de réalisation ici présenté, le pion 35 présente une section hexagonale. Cependant, selon d'autres modes de réalisation, le pion 35 pourrait être un cylindre avec un méplat, ou présenter, par exemple une section triangulaire ou carrée.

En outre, la première portion radiale 31 du bras 3 présente à son extrémité un trou de liaison 40 au fouet 5. Le trou de liaison 40 est adapté pour recevoir une extrémité d'un arbre axial 51 du fouet 5 pour permettre la rotation libre du fouet 5 par rapport au bras 3. Le trou de liaison 40 est colinéaire de l'axe de rotation B du fouet 5.

Selon une disposition technique particulièrement avantageuse, la portion sensiblement axiale 33 du bras 3 présente au moins un déflecteur 36. Tel que cela sera détaillé ci-après, le déflecteur 36 est adapté pour orienter une matière (par exemple un fluide ou une pâte alimentaire) vers le fouet 5 lors de la rotation du bras 3 et du fouet 5.

Par déflecteur, 36 il est entendu une portion qui permet de dévier la trajectoire d'un écoulement, et plus particulièrement, une portion qui permet d'orienter un écoulement vers le fouet 5.

Selon le mode de réalisation ici présenté, la portion sensiblement axiale 33 du bras 3 présente deux déflecteurs 36 opposés. Cette disposition permet avantageusement de pouvoir toujours orienter un fluide vers le fouet quel que soit le sens de rotation du bras 3.

Selon le mode de réalisation ici présenté, chaque déflecteur 36 est un biseau axial. Ainsi, dans l'exemple présenté, la portion sensiblement axiale 33 du bras 3 présente deux congés axiaux opposés définissant une arête médiane 37 séparant les deux congés.

La deuxième portion radiale 34 du bras 3 présente un premier alésage 38 adapté pour recevoir un pion de guidage 72 d'une paroi de fond 73 d'un bol 7. Le premier alésage 38 est colinéaire de l'axe de rotation A du bras 3. Cette disposition permet de lier le bras 3 en rotation libre au bol 7. L'objectif de la liaison entre la deuxième portion radiale 34 du bras 3 et le pion de guidage 72 du bol 7 est de garantir le centrage du bras 3 lors de sa rotation. En effet, tel que cela sera détaillé ci-après, pour réaliser une émulsion, le bras 3 peut atteindre une importante vitesse de rotation. Dans ce contexte, la liaison de rotation libre avec le pion de guidage 72 permet de maintenir le bras 3 en rotation autour de l'axe A, en évitant d'éventuels effets de balourds.

En sus, la deuxième portion radiale 34 du bras 3 présente un deuxième alésage 39. Le deuxième alésage 39 est adapté pour accueillir une extrémité de l'arbre axial 51 du fouet 5. Le deuxième alésage 39 est décalé par rapport au premier alésage 38. Le deuxième alésage 39 est situé sur l'axe de rotation B du fouet 5. Tel que cela sera développé ci-après, le fouet 5 est adapté pour être liés en rotation libre avec le deuxième alésage 39. Cette liaison permettant principalement de garantir le centrage du fouet lors de sa rotation autour de l'axe de rotation B. En d'autres termes, cette liaison permet d'éviter d'éventuels balancements du fouet 5 lors de sa rotation autour de l'axe de rotation B.

Tel que cela sera détaillé ci-après, le bras 3 peut être adapté pour coopérer avec le bol 7. Dans ce cas, le bras 3 est dimensionné pour que la portion sensiblement axiale 33 du bras 3 puisse frôler une paroi latérale 74 du bol 7. Typiquement, dans ce mode de réalisation, l'axe de rotation A du bras correspond à l'axe de révolution du bol 7. Ainsi, une distance entre la paroi latérale 74 du bol 7 et l'axe de rotation A (i.e. le pion de guidage 72) correspond à un rayon du bol 7. On comprend donc bien que pour que la portion sensiblement axiale 33 du bras 3 puisse frôler la paroi latérale 74, il est nécessaire qu'une distance entre l'axe de rotation A (i.e. le pion 35) et la portion sensiblement axiale 33 soit inférieure d'au moins un millimètre au rayon du bol 7.

Il est précisé qu'en condition d'utilisation, cette disposition permet à la portion sensiblement axiale 33 du bras 3 de racler de la matière ou fluide répandus sur la paroi du bol 7, pour la réorienter vers le fouet 5 grâce au déflecteur 36.

### Fouet

Le fouet 5 présente un arbre axial 51 de révolution adaptée pour être lié en rotation au bras 3. A ce titre, l'arbre axial 51 présente une première extrémité 52 adaptée pour être engagée dans le trou de liaison 40 de la première portion radiale 31 du bras 3. De plus, l'arbre axial 51 présente une deuxième extrémité 53 adaptée pour être engagée dans le deuxième alésage 39 de la deuxième portion radiale 34 du bras 3. On comprendra qu'en condition d'utilisation, l'arbre axial 51 est adapté pour être colinéaire de l'axe de rotation B du fouet 5.

En sus, le fouet 5 présente une pluralité de brins 54 adaptés pour fouetter un mélange. Selon le mode de réalisation ici présenté, chaque brin 54 comprend une extension radiale 55 et deux extensions axiales 56.

Plus précisément, selon le mode de réalisation ici présenté, pour chaque brin 54, l'extension radiale 55 est liée à une première région d'extrémité à l'arbre axial 51. Préférentiellement cette liaison est dans une portion de l'arbre axial 51 proche de la première extrémité 52 de l'arbre axial 51. De plus selon une variante de l'invention, l'extension radiale 55 présente une deuxième région d'extrémité scindée en deux, pour former un Y (i.e. une patte d'oie). De cette région scindée en deux partent les deux extensions axiales 56. Cette disposition est particulièrement avantageuse car elle permet pour chaque brin 54 d'avoir deux extensions axiales 56. Or, tel que cela sera détaillé ci-après, le nombre d'extensions axiales 56 du fouet 5 influe sur la qualité de l'émulsion préparée.

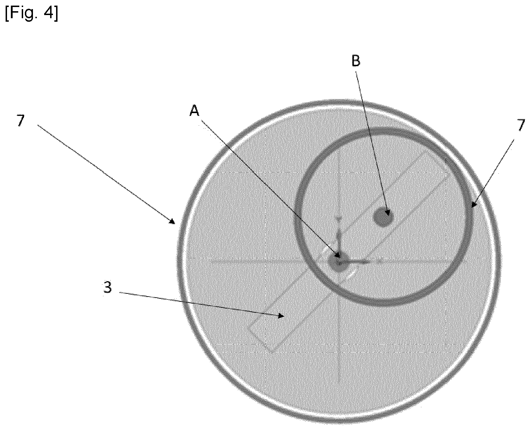

Selon une disposition technique particulièrement avantageuse, la longueur (i.e. la cote entre les deux extrémités) de l'extension radiale 55 de chaque brin 54 est supérieure à une distance séparant le pion 35 et le trou de liaison 40. En d'autres termes, cela signifie que la longueur de chaque extension radiale 55 est supérieure à une distance séparant les deux axes de rotation du bras A et du fouet B. Tel que cela est représenté sur la figure 4, cette disposition permet au fouet 5 d'avoir une envergure (i.e. un diamètre correspondant à la longueur de deux extensions radiales opposées) supérieure au rayon du bol 7. Tel que cela sera détaillé ci-après, cette disposition permet au fouet 5 d'agiter tout le mélange présent dans le bol 7, sans laisser de zone non mélangée.

D'une manière préférentielle, le fouet peut être un élément monobloc réalisé en matière plastique. D'une manière particulièrement préférentielle, on choisira un matériau partiellement élastique. Ainsi, sous l'effet des efforts lors de la rotation, les extensions axiales 55 des brins 54 tendent à s'écarter et oscillent.

Avantageusement, un utilisateur pourra séparer le fouet 5 du bras 3 en vue de son nettoyage grâce à l'aménagement en C ouvert du fouet.

### Bol

Le dispositif 1 selon l'invention peut comprendre un bol 7 adapté pour recevoir le bras 3 et le fouet 5.

D'une manière préférentielle, le bol 7 présente une forme en révolution tel qu'un cylindre à base circulaire. Le bol 7 peut être réalisé en matériau plastique. D'une manière avantageuse, on pourra choisir un matériau optiquement transparent, pour qu'un utilisateur puisse voir le contenu du bol à travers ses parois.

Selon d'autres mode de réalisation, le bol 7 peut tout à fait être réalisé en verre, en métal, en bois ou en matériau composite.

Typiquement, le bol 7 peut présenter une paroi de fond 73 de forme circulaire, et une paroi latérale 74 définissant une enveloppe cylindrique.

La paroi de fond 73 présente un pion de guidage 72 en son centre.

Un rebord libre (i.e. qui n'est pas lié à la paroi de fond) de la paroi latérale 74 peut présenter une rainure ou un évasement adapté à la réception d'un couvercle.

### Couvercle et moyens de rappel (mécanisme de rappel)

Selon une variante, le dispositif 1 peut en outre comprendre un couvercle.

D'une manière préférentielle, le couvercle est adapté pour est fixé sur le bol 7. D'une manière générale, le couvercle est muni d'un élément de connexion adapté pour coopérer avec un élément de connexion du bras 3.

Avantageusement, selon un mode de réalisation, le couvercle peut présenter un trou de connexion (empreinte femelle) adapté pour être traversé par le pion 35 de connexion du bras 3. Selon un autre mode de réalisation inverse, le couvercle peut présenter un pion de connexion et le bras 3 présente un alésage de connexion en lieu et place du pion de connexion 35.

D'une manière préférentielle, le couvercle comprend des moyens d'entrainement du bras qui comprennent des moyens de mises en rotation par énergie humaine ou par énergie électrique.

D'une manière particulièrement préférentielle, les moyens d'entrainement comprennent un câble à rappel automatique permettant une mise en rotation du bras. Cette disposition permet d'entrainer en rotation le bras 3 sous l'effet d'une traction sur le câble. Il s'agit là d'une disposition particulièrement avantageuse permettant d'obtenir une vitesse de rotation élevée du bras avec un mouvement simple (une traction sur le câble) de l'utilisateur.

D'une manière encore plus préférentielle, la connexion du bras aux moyens d'entrainements comprend une roue libre à cliquet. Cette disposition permet au bras 3 et au fouet 5 de tourner toujours dans le même sens. En effet, le système de mise en rotation par traction sur un câble fonctionne (de manière résumée) en enroulant un câble autour d'un axe. Une traction sur le câble fait alors tourner l'axe dans un sens. Pour re-enrouler le câble, un ressort de rappel fait tourner l'axe dans le sens inverse. Le système de roue libre à cliquet permet que seule la rotation initiée par la traction du câble fasse tourner le bras 3. Le système étant en roue libre (débrayé) lors du rappel du câble.

### Fonctionnement

En fonctionnement, selon un mode préféré, le bras 3 est dans le bol 7, lié en pivot libre au pion de guidage 72. Le fouet 5 est lié au bras 3.

Un utilisateur introduit dans le bol un mélange à émulsionner, par exemple du blanc d'oeuf.

Ensuite, l'utilisateur ferme le bol 7 avec le couvercle, ce qui du même coup accouple les moyens d'entrainement au pion 35.

Pour réaliser l'émulsion, l'utilisateur effectue des tractions sur le câble d'entrainement, puis laisse le câble se re-enrouler.

Lors de chaque traction sur le câble, le pion 35 est entrainé en rotation, et par conséquent, le bras 3 est entrainé en rotation autour de son axe de rotation A. Ainsi, la liaison entre le bras 3 et le fouet 5, qui correspond à l'axe de rotation du fouet B, tourne autour de l'axe A à la vitesse du bras 3. La distance entre l'axe de rotation A du bras 3 et l'axe de rotation B du fouet 5 génère un couple qui s'applique au fouet 5. L'application de ce couple sur le fouet 5 augmente la vitesse de rotation du fouet 5 qui tourne autour de l'axe B à une vitesse de rotation supérieure (en valeur absolue) à la vitesse de rotation du bras 3.

Ainsi, le fouet 5 à un mouvement de rotation combiné autour des deux axes A et B.

En d'autres termes, le fouet 5 tourne sur lui-même autour de l'axe B tout en étant entrainé par le bras 3 autour de l'axe A. D'une manière imagée, ce mouvement peut être comparée à celui de la terre tournant d'une part sur elle-même et tournant autour du soleil.

Ainsi, en fonctionnement le fouet 5 va couvrir une zone correspondant à une projection de son envergure sur la trajectoire de l'axe B autour de l'axe A. On comprend donc bien que les dimensions spécifiques des extensions radiales permettent au fouet de couvrir toute la surface de la paroi de fond du bol, sans laisser d'espace vide. Cette disposition permet très avantageusement de garantir une émulsion homogène.

## Revendications

1. Dispositif (1) pour réaliser des mélanges, comprenant un bras (3), adapté pour être entrainé en rotation, autour d'un axe de rotation du bras (A), par des moyens d'entrainement, le dispositif (1) comprenant au moins un fouet (5) monté par une liaison pivot (40) au bras (3) en libre rotation, autour d'un axe de rotation du fouet (B) distinct de l'axe de rotation du bras (3), le bras (3) présentant une forme en C avec une première portion radiale (31) présentant la liaison pivot (40) au fouet (5), une portion sensiblement axiale (33) et une deuxième portion radiale (34), le dispositif étant **caractérisé en ce que** le fouet (5) présente une extension radiale (55) présentant une cote supérieure à une distance séparant l'axe de rotation du bras (A) et l'axe de rotation du fouet (B).

2. Dispositif (1) selon la revendication 1, dans lequel la portion sensiblement axiale (33) du bras (3) présente au moins un déflecteur (36) adapté pour orienter une matière vers le fouet (5) lors de la rotation du bras (3) et du fouet (5).

3. Dispositif (1) selon l'une quelconque des revendications 1 ou 2, dans lequel la première portion radiale (31) du bras (3) présente un pion de connexion (35) aux moyens d'entrainement, le pion de connexion (35) étant colinéaire de l'axe de rotation bras (A).

4. Dispositif (1) selon l'une quelconque des revendications 1 à 3, dans lequel le fouet (5) présente une pluralité de brins (54), chaque brin (54) s'étendant à partir de l'axe de rotation du fouet (B) avec une extension radiale (55) et au moins une extension axiale (56).

5. Dispositif (1) selon l'une quelconque des revendications 1 à 4 comprenant un bol (7) adapté pour recevoir le bras (3) mélangeur et le fouet (5).

6. Dispositif (1) selon les revendications 2 et 5 en combinaison dans lequel la portion sensiblement axiale (33) du bras (3) est adaptée pour frôler une paroi latérale (74) d'un bol (7).

7. Dispositif (1) selon la revendication 6 dans lequel le bol (7) présente une paroi latérale et une paroi de fond (73), la paroi de fond (73) présentant un pion de guidage (72) en rotation du bras (3) mélangeur, le pion de guidage (72) étant colinéaire avec l'axe de rotation bras (A).

8. Dispositif (1) selon les revendications 2 et 7 en combinaison dans lequel la deuxième portion radiale (34) du bras (3) est adaptée pour être liée en rotation libre au pion de guidage (72) de la paroi de fond (73) du bol (7).

9. Dispositif (1) selon les revendications 3 et 5 en combinaison, comprenant un couvercle muni d'un élément de connexion coopérant avec un élément de connexion du bras (3).

10. Dispositif (1) selon l'une quelconque des revendications 1 à 9, dans lequel les moyens d'entrainement comprennent des moyens de mises en rotation par énergie humaine ou par énergie électrique.

11. Dispositif (1) selon la revendication 10, dans lequel les moyens d'entrainement manuel comprennent un câble à rappel automatique permettant une mise en rotation du bras (3).

12. Dispositif (1) selon la revendication 11, dans lequel la connexion du bras (3) aux moyens d'entrainements comprend une roue libre à cliquet.

## Patentansprüche

1. Vorrichtung (1) zur Durchführung von Mischungen, umfassend einen Arm (3), der angepasst ist, um anhand von Antriebsmitteln um eine Drehachse des Armes (A) herum in Drehung angetrieben zu werden, wobei die Vorrichtung (1) mindestens einen Rührbesen (5) umfasst, der durch eine Schwenkverbindung (40) am Arm (3) in freier Drehung um eine Drehachse des Rührbesens (B), die sich von der Drehachse des Armes (3) unterscheidet, montiert ist, wobei der Arm (3) eine C-Form mit einem ersten radialen Abschnitt (31), der die Schwenkverbindung (40) mit dem Rührbesen (5) aufweist, einen im Wesentlichen axialen Abschnitt (33) und einen zweiten radialen Abschnitt (34) aufweist, wobei die Vorrichtung **dadurch gekennzeichnet ist, dass** der Rührbesen (5) eine radiale Erstreckung (55) aufweist, die ein Maß aufweist, das größer ist als eine Entfernung, welche die Drehachse des Armes (A) und die Drehachse des Rührbesens (B) trennt.

2. Vorrichtung (1) nach Anspruch 1, wobei der im Wesentlichen axiale Abschnitt (33) des Armes (3) mindestens einen Abweiser (36) aufweist, der angepasst ist, um eine Materie beim Drehen des Armes (3) und des Rührbesens (5) zum Rührbesen (5) zu orientieren.

3. Vorrichtung (1) nach einem der Ansprüche 1 oder 2, wobei der erste radiale Abschnitt (31) des Armes (3) einen Verbindungsstift (35) mit den Antriebsmitteln aufweist, wobei der Verbindungsstift (35) kolinear zur Drehachse des Armes (A) ist.

4. Vorrichtung (1) nach einem der Ansprüche 1 bis 3, wobei der Rührbesen (5) eine Vielzahl von Strängen (54) aufweist, wobei sich jeder Strang (54) aus der Drehachse des Rührbesens (B) mit einer radialen Erstreckung (55) und mindestens einen axialen Erstreckung (56) erstreckt.

5. Vorrichtung (1) nach einem der Ansprüche 1 bis 4, umfassend eine Schale (7), die angepasst ist, um den Mischarm (3) und den Rührbesen (5) aufzunehmen.

6. Vorrichtung (1) nach den Ansprüchen 2 und 5 in Kombination, wobei der im Wesentlichen axiale Abschnitt (33) des Armes (3) angepasst ist, um eine Seitenwand (74) einer Schale (7) leicht zu berühren.

7. Vorrichtung (1) nach Anspruch 6, wobei die Schale (7) eine Seitenwand und eine Bodenwand (73) aufweist, wobei die Bodenwand (73) einen Führungsstift (72) in Drehung des Mischarmes (3) aufweist, wobei der Führungsstift (72) kolinear zur Drehachse des Armes (A) ist.

8. Vorrichtung (1) nach den Ansprüchen 2 und 7 in Kombination, wobei der zweite radiale Abschnitt (34) des Armes (3) angepasst ist, um frei drehend mit dem Führungsstift (72) der Bodenwand (73) der Schale (7) verbunden zu werden.

9. Vorrichtung (1) nach den Ansprüchen 3 und 5 in Kombination, umfassend einen Deckel, der mit einem Verbindungselement versehen ist, welches mit einem Verbindungselement des Armes (3) zusammenwirkt.

10. Vorrichtung (1) nach einem der Ansprüche 1 bis 9, wobei die Antriebsmittel Mittel zum in Drehung bringen durch menschliche Energie oder durch elektrische Energie umfassen.

11. Vorrichtung (1) nach Anspruch 10, wobei die Mittel zum manuellen Antrieb ein Kabel mit automatischer Rückstellung umfassen, welches ein in Drehung bringen des Armes (3) ermöglichen.

12. Vorrichtung (1) nach Anspruch 11, wobei die Verbindung des Armes (3) mit den Antriebsmitteln einen Ratschen-Freilauf umfasst.

## Claims

1. Device (1) for producing mixtures, comprising an arm (3), adapted to be rotated, about an axis of rotation of the arm (A), by drive means, the device (1) comprising at least one whisk (5) mounted by a pivot connection (40) to the arm (3) in free rotation, about an axis of rotation of the whisk (B) distinct from the axis of rotation of the arm (3), the arm (3) having a C-shape with a first radial portion (31) having the pivot connection (40) to the whisk (5), a substantially axial portion (33) and a second radial portion (34), the device being **characterised in that** the whisk (5) has a radial extension (55) having an upper side at a distance separating the axis of rotation of the arm (A) and the axis of rotation of the whisk (B).

2. Device (1) according to claim 1, wherein the substantially axial portion (33) of the arm (3) has at least one deflector (36) adapted to orient a material towards the whisk (5) during the rotation of the arm (3) and of the whisk (5).

3. Device (1) according to any one of claims 1 or 2, wherein the first radial portion (31) of the arm (3) has a pin (35) for connecting to the drive means, the connecting pin (35) being colinear with the axis of rotation of the arm (A).

4. Device (1) according to any one of claims 1 to 3, wherein the whisk (5) has a plurality of strands (54), each strand (54) extending from the axis of rotation of the whisk (B) with a radial extension (55) and at least one axial extension (56).

5. Device (1) according to any one of claims 1 to 4 comprising a bowl (7) adapted to receive the mixing arm (3) and the whisk (5).

6. Device (1) according to claims 2 and 5 combined, wherein the substantially axial portion (33) of the arm (3) is adapted to brush a side wall (74) of a bowl (7).

7. Device (1) according to claim 6, wherein the bowl (7) has a side wall and a bottom wall (73), the bottom wall (73) having a pin (72) for guiding the mixing arm (3) in rotation, the guiding pin (72) being colinear with the axis of rotation of the arm (A).

8. Device (1) according to claims 2 and 7 combined, wherein the second radial portion (34) of the arm (3) is adapted to be linked in free rotation to the guide pin (72) of the bottom wall (73) of the bowl (7).

9. Device (1) according to claims 3 and 5 combined, comprising a cover provided with a connecting element engaging with a connecting element of the arm (3).

10. Device (1) according to any one of claims 1 to 9, wherein the drive means comprise means for rotating through human energy or through electrical energy.

11. Device (1) according to claim 10, wherein the manual drive means comprise an automatic return cable enabling a rotation of the arm (3).

12. Device (1) according to claim 11, wherein the connection of the arm (3) to the drive means comprises a ratchet freewheel.
